Europäisches Patentamt

European Patent Office

Office européen des brevets

(19)

(11) Veröffentlichungsnummer : **0 135 042**
**B1**

(12) **EUROPÄISCHE PATENTSCHRIFT**

(45) Veröffentlichungstag der Patentschrift :
30.09.87

(21) Anmeldenummer : 84108595.4

(22) Anmeldetag : 20.07.84

(51) Int. Cl.⁴ : **F 16 K   3/02**

(54) Schiebereinrichtung.

(30) Priorität : 26.07.83 DE 3326797

(43) Veröffentlichungstag der Anmeldung :
27.03.85 Patentblatt 85/13

(45) Bekanntmachung des Hinweises auf die Patenterteilung : 30.09.87 Patentblatt 87/40

(84) Benannte Vertragsstaaten :
BE CH DE FR GB LI NL SE

(56) Entgegenhaltungen :
AT-B-    80 743
DE-A- 3 131 819
DE-A- 3 210 422
GB-A-    649 957
GB-A- 1 260 114
US-A- 2 606 740
US-A- 3 185 436
US-A- 3 722 857

(73) Patentinhaber : Silo Verfahrens AG
Hofstrasse 1
CH-6301 Zug (CH)

(72) Erfinder : König, Gustav
Stadtwaldstrasse 69
D-8052 Moosburg (DE)

(74) Vertreter : Jackisch, Walter, Dipl.-Ing.
Menzelstrasse 40
D-7000 Stuttgart 1 (DE)

## Beschreibung

Die Erfindung betrifft eine Schiebereinrichtung mit den Merkmalen des Oberbegriffs des Anspruchs 1.

Bei einem aus der US-A-3 185 436 bekannten Sperrschieber ist in einem Grundkörper eine Schieberplatte gelagert, mittels der eine im Grundkörper ausgebildete Öffnung für das Medium absperrbar ist. Zwischen der Schieberplatte und der einen Grundkörperplatte befindet sich ein Dichtring, der in einer die Öffnung umgebenden Ringnut angeordnet ist. Der in Querschnitt etwa U-förmige Dichtring besitzt eine der Überdruckseite nach innen zugewandte Umfangsnut, die von einer Grundwand, einer Seitenwand und einer dieser gegenüberliegenden Dichtlippe begrenzt ist. Die Dichtlippe verläuft auf Abstand parallel zur Seitenwand und kann mit Unterstützung des Überdrucks radial schräg gegen eine Schiebedichtfläche der Schieberplatte gedrückt werden.

Aus der US-A-3 722 857 und der GB-A-1 260 114 sind ähnliche Sperrschieber bekannt, bei denen der Dichtring einen etwa C-förmigen Querschnitt aufweist, wobei die Dichtlippe durch die Einbaulage des Dichtrings eine elastische Vorspannung bekommen kann.

Beim Überfahren der Schieberplatte über die Öffnung des Grundkörpers besteht bei den bekannten Dichtringen grundsätzlich die Gefahr einer Beschädigung und eines Aufstülpens der Dichtung bzw. der Dichtlippe. Dies insbesondere deshalb, weil vor allem im letzten Abschnitt des Überschiebens der letzte Teil der Dichtumg versucht, infolge der Druckspannung die Dichtlippe nach oben wegzudrücken. Dieses Ausweichen der Dichtung behindert das einwandfreie Überfahren des Unfangsrandes der Öffnung. Es ist somit einerseits die Vorspannung der Dichtung zur einwandfreien Abdichtung erforderlich und es muß andererseits ein einwandfreies Überfahren des Öffnungsrandes gewährleistet sein, da sonst die Dichtung aufgrund frühzeitiger Beschädigung eine nur geringe Lebensdauer hat und sogar von ihrem Sitz losgerissen werden kann. Die Gefahr einer Beschädigung der Dichtung besteht insbesondere dann, wenn die Schiebereinrichtung zur Förderung eines feinkörnigen Mediums verwendet wird. Die feinen Körner des zu transportierenden Mediums können in den Bereich zwischen der Dichtlippe und der Schieberplatte gelangen und die Dichtung beim Überfahren der Schieberplatte verletzen.

Die Aufgabe der Erfindung besteht darin, eine Schiebereinrichtung mit den Merkmalen des Oberbegriffs des Anspruchs 1 dahingehend weiterzubilden, daß mit einfachen Mitteln und unkompliziertem Aufbau eine zuverlässig hohe Abdichtung und ein dichtungsschonendes Überfahren der Öffnungsränder bei einer Verstellbewegung der Schieberplatte erzielt wird.

Diese Aufgabe wird erfindungsgemäß durch die kennzeichnenden Merkmale des Anspruchs 1 gelöst.

Bei der erfindungsgemäßen Schiebereinrichtung ist stets eine zuverlässige Anfangs- beziehungsweise Grundabdichtung gegeben, da die Dichtlippe aufgrund ihrer speziellen Ausrichtung und der elastischen Verformung des Dichtringes unabhängig von etwaigen Druckdifferenzen gegen die Schiebedichtfläche drückt. Bereits bei einem geringfügigen Überdruck ergibt sich durch die spezielle Ausbildung und Anordnung der Umfangsnut im Dichtring ein zusätzlicher Dichtdruck, der entsprechend einer weiteren Druckerhöhung ansteigt und so für eine zuverlässige Abdichtung sorgt. Diese Abdichtung wird dadurch unterstützt, daß die Dichtlippe aufgrund ihrer Schrägposition in der Lage ist, kleine Oberflächenunregelmäßigkeiten auszugleichen. Bei der Verschiebung der Schieberplatte in eine andere Arbeitsstellung überstreicht der Dichtring und damit die zur Dichtfläche hin schräg vorgespannte Dichtlippe die Randkante der jeweiligen Öffnung, wobei es sich überraschenderweise gezeigt hat, daß sowohl bei einem hohen Überdruck beziehungsweise Betriebsdruck als auch bei einem abgebauten Betriebsdruck bei lediglich normaler Vorspannung der Dichtlippe gegen die Dichtfläche, die Dichtlippe beim Überfahren der Öffnungskante einwandfrei dicht anliegend ausgerichtet bleibt und nicht abschert oder gar überstülpt, so daß in jedem Falle bei einer einfachen Bewegung der Schieberplatte in einer einzigen Ebene eine zuverlässige Abdichtung und eine hohe Lebensdauer gewährleistet ist.

Die erfindungsgemäße Schiebereinrichtung ist universell bei Vorrichtungen einsetzbar, bei denen an einem Bauteil eine ebene Dichtfläche vorgesehen ist, ein weiteres Bauteil gegenüber diesem in einer in dieser Dichtfläche parallelen Bewegungsebene zu bewegen ist und ein Dichtring am zweiten Bauteil gegen die Dichtfläche andrückt unter Abdichtung des Ringinneren gegen das Ringäußere, wobei der Dichtring auch uber den Umfangsrand einer Öffnung geschoben werden kann. Ein bevorzugter Anwendungsfall ist eine Schieberweiche, insbesondere für pneumatische Förderanlagen, mit einem ersten Weichenteil und einem relativ zum ersten Weichenteil parallel zur Dichtfläche bewegbaren zweiten Weichenteil mit einer der Dichtfläche gegenüberliegenden, wenigstens eine Weichenkanal-Mündung aufweisenden Stirnfläche, wobei die Weichenkanal-Mündungen der Stirnfläche von jeweils wenigstens einem am zweiten Weichenteil gehalterten Dichtring nach der Erfindung umringt sind. Eine derartige Schieberweiche kann beispielsweise einen oder mehrere Eingangskanäle auf eine Mehrzahl von Ausgangskanälen entsprechend der Anzahl der möglichen Arbeitsstellungen schalten. Bei einer linearen Verschiebung der Schieberplatte weist eine solche Schiebereinrichtung besonders vorteilhaft zwei Arbeitsstellungen auf.

Für Weichen mit einer Vielzahl von Arbeitsstellungen und zugleich kompaktem Weichenaufbau eignet sich vor allem eine solche Vorrichtung, die als Drehschieberweiche ausgeführt ist, welche dadurch gekennzeichnet ist, daß die Kanalmündungen der Stirnfläche auf einem Kreisbogen angeordnet sind und das eine Weichenteil relativ zum anderen Weichenteil um eine zu der Stirnfläche senkrechte, durch den Kreismittelpunkt gehende Drehachse verdrehbar ist.

Für eine einfache Verbindung zwischen dem Kanal des bewegten Weichenteils und einem stationären Kanalanschluß ist es günstig, einen flexiblen Schlauch vorzusehen, der in bevorzugter Ausführung an beiden Enden je einen materialeinheitlich angeformten Bund aufweist, der über einen Flanschring verspannt wird. Ein solcher Schlauchanschluß hat einen äußerst einfachen Aufbau und ist kostengünstig herstellbar, wobei gleichzeitig an beiden Enden Dichtflächen ausgebildet sind, über die auf einfache Weise eine zuverlässige Abdichtung erreicht wird.

Die erfindungsgemäße Schiebereinrichtung kann vorteilhaft auch als Sperrschieberventil ausgeführt sein. Ein derartiges Sperrschieberventil kann zweckmäßig eine Schieberplatte aufweisen, die in einem Schiebergehäuse parallel zur Dichtfläche entlang einer Führungsfläche des Schiebergehäuses zwischen einer Schließstellung und einer Durchgangsstellung bewegbar ist. In der Schließstellung deckt die Schieberplatte eine Kanalmündung in der Führungsfläche ab, und zwar unter abdichtender Anlage an wenigstens einem an der Führungsfläche gehalterten, die Kanalmündung umringenden Ringdichtung nach der Erfindung, wobei die Schieberplatte in der Durchgangsstellung die Kanalmündung freigibt. Ein solches Sperrschieberventil kann nicht nur als Abschluß-Ventil einer Leitung, sondern auch als Durchgangs-Ventil zum wahlweisen Absperren eines das Schiebergehäuse durchsetzenden Durchgangskanals ausgeführt sein. Hierzu ist erfindungsgemäß die Schieberplatte beidseits mit einer Schiebedichtfläche versehen, die jeweils einer mit einer Kanalmündung und wenigstens einem die Kanalmündung umringenden Dichtring versehenen Führungsfläche des Schiebergehäuses gegenüberliegt. Die beiden Dichtringe zu beiden Seiten der Schieberplatte oder zwei Dichtringpaare, beispielsweise beim Wechsel der Überdruckseite, dichten sowohl in der Schließstellung als auch in der Durchgangsstellung den Durchgangskanal gegenüber der Umgebung ab.

Bevorzugte Ausgestaltungen und Weiterbildungen sowie weitere Vorteile und wesentliche Einzelheiten der Erfindung sind den Merkmalen der Unteransprüche, der nachfolgenden Beschreibung und der Zeichnung zu entnehmen, die in schematischer Darstellung bevorzugte Ausführungsformen als Beispiel zeigt. Es stellen dar :

Figur 1 eine teilweise geschnittene Seitenansicht einer erfindungsgemäßen Schieberweiche,

Figur 2 eine Draufsicht auf die Schieberweiche der Fig. 1,

Figur 3 eine Unteransicht der Schieberweiche der Fig. 1,

Figur 4 eine vergrößerte Schnittansicht der Schieberweiche der Fig. 1 gemäß der Linie IV-IV,

Figur 5 eine Seitenansicht eines Teils der Schieberweiche der Fig. 1 mit einer anderen Stellzylinderausführung für die Schieberplatte,

Figur 6 eine Rückansicht auf den Stellzylinder der Fig. 5,

Figur 7 eine Draufsicht auf eine erfindungsgemäße Drehschieberweiche,

Figur 8 eine Schnittansicht der Drehschieberweiche der Fig. 7 gemäß der Linie VIII-VIII,

Figur 9 eine Schnittansicht eines erfindungsgemäßen Sperrschieberventils in einer Verschlußposition,

Figur 10 eine Schnittansicht des Sperrschieberventils der Fig. 9 in einer Öffnungsposition,

Figur 11 eine Teilschnittansicht eines Doppeldichtungsbereichs der erfindungsgemäßen Schiebereinrichtung für eine Anwendung bei Unter- und Überdruck,

Figur 12 eine Schnittansicht eines erfindungsgemäßen Dichtrings,

Figur 13 eine vergrößerte Teilschnittansicht des Dichtrings ähnlich der Fig. 12,

Figur 14 eine Schnittansicht des Dichtrings ähnlich der Fig. 13 mit einer anderen Befestigungsarretierung,

Figur 15 eine Schnittansicht des Dichtrings ähnlich den Fig. 13 und 14, mit einer nochmals anderen Befestigungsarretierung,

Figur 16 eine Schnittansicht des Dichtrings ähnlich den Fig. 13 bis 15 mit einer anders ausgeführten Dichtlippe.

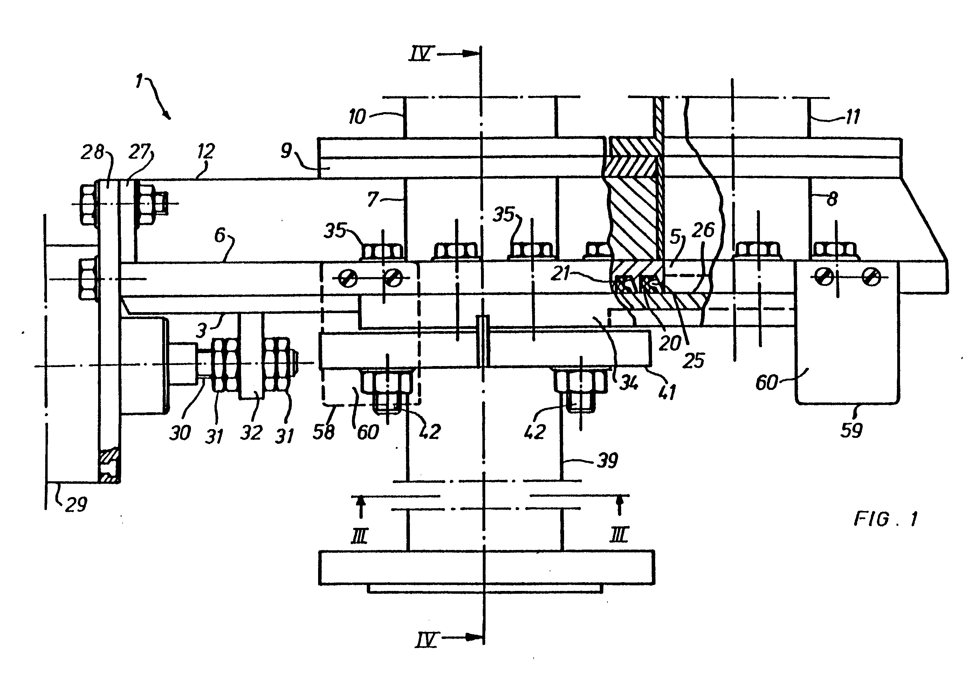

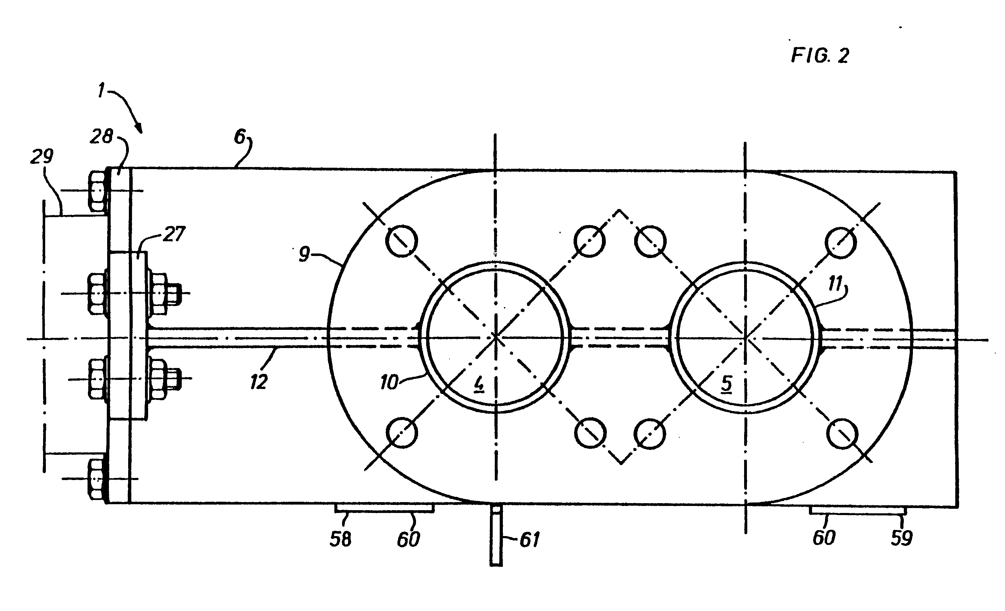

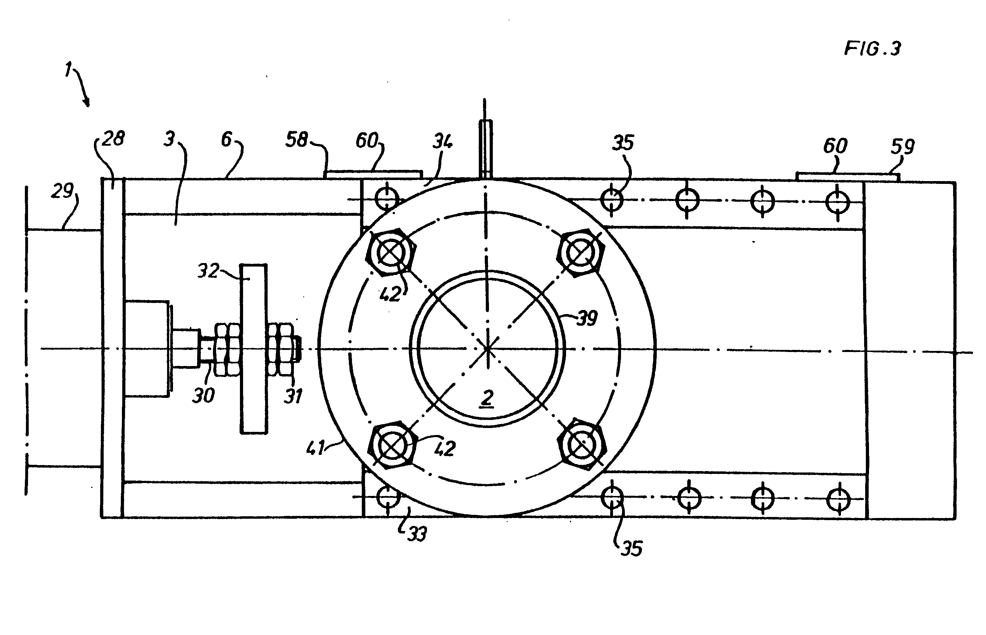

Die in den Fig. 1 bis 4 dargestellte Schieberweiche 1 dient der wahlweisen Verbindung einer Durchgangsöffnung 2, die in einer Schieberplatte 3 ausgebildet ist, mit einer von zwei Öffnungen 4, 5, die in einer Grundplatte 6 der Schieberweiche 1 ausgebildet sind. Die beiden Öffnungen 4, 5 verlaufen in Anschlußrohren 7, 8, die auf der Grundplatte 6 aufgeschweißt sind oder mit ihr ein Gußteil bilden. Den beiden Anschlußrohren 7, 8 ist ein gemeinsamer Stirnflanschteller 9 (Peiner) zugeordnet, der länglich oval ausgeführt und auf Abstand parallel zur Grundplatte 6 angeordnet ist. An dem Stirnflanschteller 9 sind koaxial zu den beiden Anschlußrohren 7, 8 zwei Rohre 10, 11, durch die das zu fördernde Medium geleitet wird, angeflanscht. Zwischen der Grundplatte 6 und dem Stirnflanschteller 9 befindet sich quer dazu eine Versteifungsplatte 12, die sich über die gesamte Länge der Grundplatte 6 erstreckt und in deren Mittenbereich so angeordnet ist, daß eine feste Verbindung zwischen der Grundplatte 6, dem Stirnflanschteller 9 und den beiden Anschlußrohren 7, 8 besteht. Es ist damit praktisch ein Doppel-T-Träger gebildet, wodurch eine ausgesprochen kurz bauende Kompaktbaueinheit gegeben ist, die äußerst stabil und verwindungssteif ist, so daß selbst große Querkräfte durch die anzuschließenden Rohre 10, 11, die in der Praxis zumeist nie exakt fluchtend ausgeführt sind, einwandfrei aufgefangen werden können.

Vorteilhaft können bei dieser Schieberweiche 1 mindestens sämtliche Innenflächen in den Anschlußrohren 7, 8 und in der Grundplatte 6 zum Schutz gegen das durchströmende Medium mit einer verschleißfesten Schutzbeschichtung versehen werden. Eine solche Schutzbeschichtung läßt sich aufgrund der kurzen Bauhöhe zwischen der Grundplatte 6 und dem Stirnflanschteller 9 von etwa 80 bis 90 Millimetern besonders günstig und zuverlässig ausführen. Zudem ist dabei die Verschleißzone auf ein Minimum reduziert, so daß eine lange Lebensdauer gewährleistet ist.

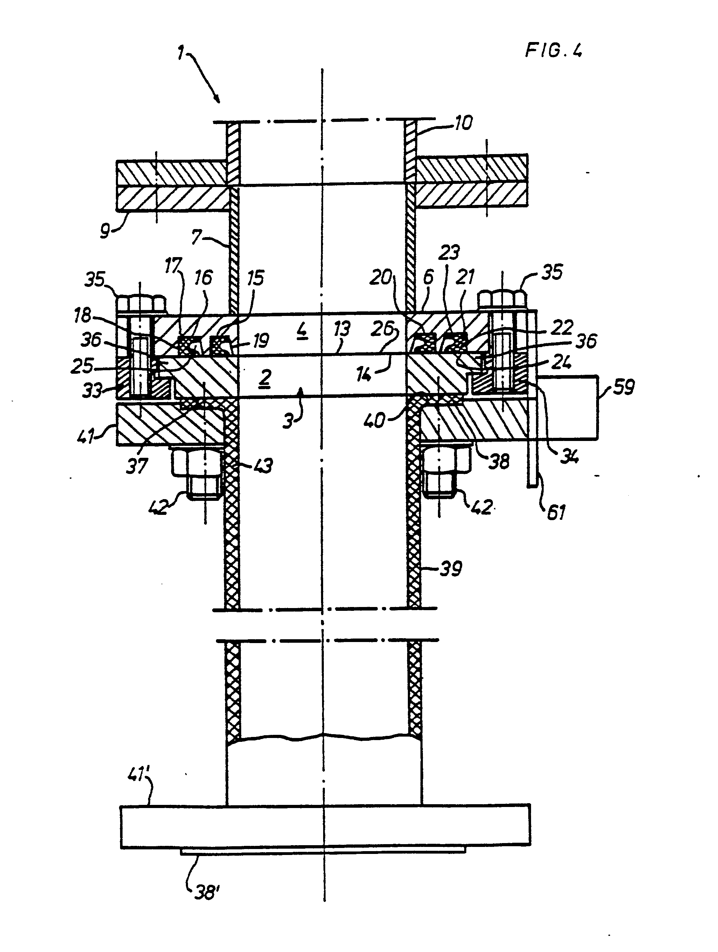

Der Fig. 4 ist zu entnehmen, daß ein Umfangsrand 13 der Öffnung 4 in der Ebene der an der unteren Seite der Grundplatte 6 ausgebildeten Führungsfläche 14 liegt. Konzentrisch zur kreisrunden Öffnungsmündung beziehungsweise Umfangsrand 13 sind zwei Ringnuten 15, 16 in der Grundplatte 6 ausgebildet. Diese Ringnuten 15, 16 weisen einen im wesentlichen rechteckförmigen Querschnitt auf und sind in der Ebene der Führungsfläche 14 offen. Die Ringnuten 15, 16 sind von einer Grundfläche 17, einer Seitenfläche 18 und einer dieser gegenüberliegenden Wandfläche 19 begrenzt. Diese Wandfläche 19 ist derart schräg ausgebildet, daß die Breite der Ringnuten 15, 16 im Bereich ihrer Öffnung größer ist als die Breite an der Grundfläche 17, wobei der Schrägverlauf der Wandfläche 19 zur Vergrößerung der Öffnungsbreite in Richtung zur Überdruckseitehin ausgeführt ist. Beim vorliegenden Ausführungsbeispiel ist der Innenraum der Schieberweiche 1 zur Förderung eines zum Beispiel feinkörnigen Schüttgutes als Überdruckseite vorgesehen. Die Querschnitte der beiden Ringnuten 15, 16 sind gleich, jedoch ist der Durchmesser der äußeren Ringnut 16 größer als der Durchmesser der inneren Ringnut 15.

In den Ringnuten 15, 16 ist je ein Dichtring 20, 21 angeordnet. Der Dichtring 20 weist einen kleineren Durchmesser auf als der Dichtring 21. Im übrigen sind beide Dichtringe 20, 21 gleich ausgeführt und bestehen aus einem elastischen, hoch verschleißfesten Material.

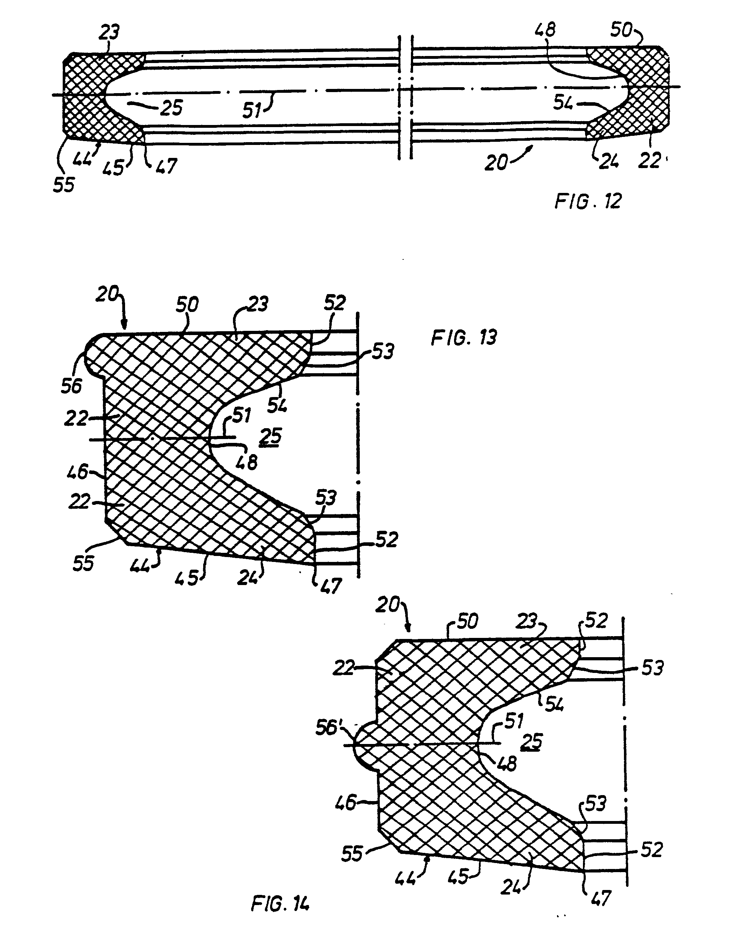

Insbesondere die Fig. 12 bis 16 zeigen, daß die Dichtringe 20, 21 im Querschnitt im wesentlichen U-förmig ausgebildet sind und eine Grundwand 22, eine Seitenwand 23 und annähernd parallel zu dieser eine Dichtlippe 24 aufweist, wobei eine Umfangsnut 25 im Querschnittsbereich der Dichtringe 20, 21 gebildet ist, deren Öffnungsseite der Überdruckseite der Schiebereinrichtung zugewandt ist. Die Dichtringe 20, 21 sind auf einfache Weise in die Ringnuten 15, 16 ohne besondere Klebemittel oder dergleichen eingedrückt, wobei die Seitenwand 23 an der Grundfläche 17 und die Grundwand 22 an der Seitenfläche 18 abgestützt anliegen. Die Dichtlippe 24 verläuft radial schräg in Richtung zur Überdruckseite und ist gleichzeitig unter elastischer Vorspannung in einem spitzen Winkel gegen eine Schiebedichtfläche 26 gepresst, die an der Schieberplatte 3 ausgebildet ist.

An der Grundplatte 6 ist an dem einen Plattenende ein vertikal nach oben abstehender Haltewinkel 27 angeschweißt, an dem ein Montageflansch 28 mittels Schrauben befestigt ist. Der Montageflansch 28 dient der Festlegung eines Stellzylinders 29, der einem pneumatischen Stellantriebssystem zugehörig ist. Die Kolbenstange 30 des Stellzylinders 29 ist mit ihrem freien Gewindeende mittels Gewindemuttern 31 an einem nach unten abstrebenden Befestigungsteil 32 lösbar angeordnet, der als an der Unterseite der Schieberplatte 3 angeschweißte Lasche ausgeführt ist. Die Muttern 31 dienen zugleich zur Einstellung des Hubweges des Stellzylinders 29, um eine genaue Übereinstimmung der Öffnungen zu erhalten.

Die an der Unterseite der Grundplatte 6 verschiebbar gelagerte Schieberplatte 3 ist hier an beiden Längsseiten der Grundplatte 6 mit Führungsleisten 33, 34 gehalten, die mit Schrauben 35 an der Grundplatte 6 befestigt sind und jeweils einen Längsseitenrand 36 der Schieberplatte 3 untergreifen. In sämtlichen Verschiebestellungen der Schieberplatte 3 gegenüber der Grundplatte 6 liegen beide Platten dicht aneinander. Zur Erleichterung der gegenseitigen Verschiebung sind vorzugsweise sowohl die Schiebedichtfläche 26 der Schieberplatte 3 als auch die Führungsfläche 14 der Grundplatte 6 mit einer Gleitschicht versehen. Eine solche Gleitschicht kann vorzugsweise aus einem thermoplastischen Kunststoff bestehen, der elastisch und hochverschleißfest ist. Die Gleitschicht kann aber auch aus einer Aluminiumoxyd-Verbindung vorteilhaft aus $Al_2O_3TiO_2$ bestehen. Die Gleitschicht kann zweckmäßig im Plasma-Spritzverfahren auf die Flächen aufgetragen werden.

An der der Schiebedichtfläche 26 gegenüberliegenden unteren Anschlußfläche 37 der Schieberplatte 3 ist ein Dichtungsflansch 38 angeschlossen, der einem flexiblen Schlauch 39 zugehörig ist. Der Schlauch 39 und der Dichtungsflansch 38 sind materialeinheitlich einstückig ausgebildet. Die Mittenachse des Schlauches 39 fluchtet mit der Mittenachse der Durchgangsöffnung 2 der Schieberplatte 3. Der Dichtungsflansch 38 befindet sich in einer Aussparung 40 eines Flanschringes 41, der mittels Gewindebolzen 42 gegen die Schieberplatte 3 so verspannt ist, daß der Dichtungsflansch 38 absolut dicht an der Anschlußfläche 37 anliegt. An dem anderen Ende des Schlauches 39 ist vorteilhaft ebenfalls ein Dichtungsflansch 38' materialeinheitlich einstückig ausgebildet, dem auch ein Flanschring 41' zugeordnet ist. Der Schlauch 39 ist derart flexibel, daß er bei Weichenumstellungen sowohl gelängt als auch gestaucht werden kann und zudem relativ enge Biegungen vollziehen kann, wobei sichergestellt ist, daß der Querschnitt des Schlauches 39 im wesentlichen stets erhalten bleibt und letzterer nicht zusammengedrückt wird. Um eine Versteifung des Schlauches 39 an seinen Endbereichen im Übergang zu den Dichtungsflanschen 38, 38' zu erzielen, ist es günstig, die Wandung 43 des Schlauches 39 an den Endbereichen stärker auszubilden als im übrigen mittleren Längenbereich des Schlauches 39. Durch diese Ausgestaltung ist eine leichte, bewegliche und elastische Verformung des Schlauches 39 möglich. Infolge der Verdickung der Wandung 43 an den Endbereichen bleibt auch bei der Ausbiegung des Schlauches 39 der oberste und unterste Abschnitt etwa axial, also unverformt, während der eigentliche von der Achse abweichende Abschnitt sich einer idealen, nämlich S-förmigen Ausbiegungsform leicht nähern kann. Bei höheren Drücken wird der Schlauch mit einer vorzugsweise äußeren Spirale versehen, die vorteilhaft eingebettet sein kann. Durch die Spirale wird eine zusätzliche Verstärkung der Schlauchwandung erzielt.

Der erfindungsgemäße Schlauch 39 zeichnet sich durch äußerst günstige beziehungsweise niedrige Herstellungskosten sowie durch einen einfachen Aufbau aus. Von Vorteil ist ferner, daß der Schlauchanschluß besonders leicht hergestellt und wieder gelöst werden kann. Zum Herstellen der Schlauchverbindung muß lediglich der Flanschring 41 über den flexiblen Dichtungsflansch 38 gestreift werden und anschließend mit der Schieberplatte 3 verschraubt werden. Aufgrund der Flexibilität des Schlauches 39 und des Dichtungsflansches 38 ist es somit möglich, nach entsprechendem Zusammendrücken den Flanschring 41 einfach über das Schlauchende zu streifen, so daß eine problemlose Montage möglich ist.

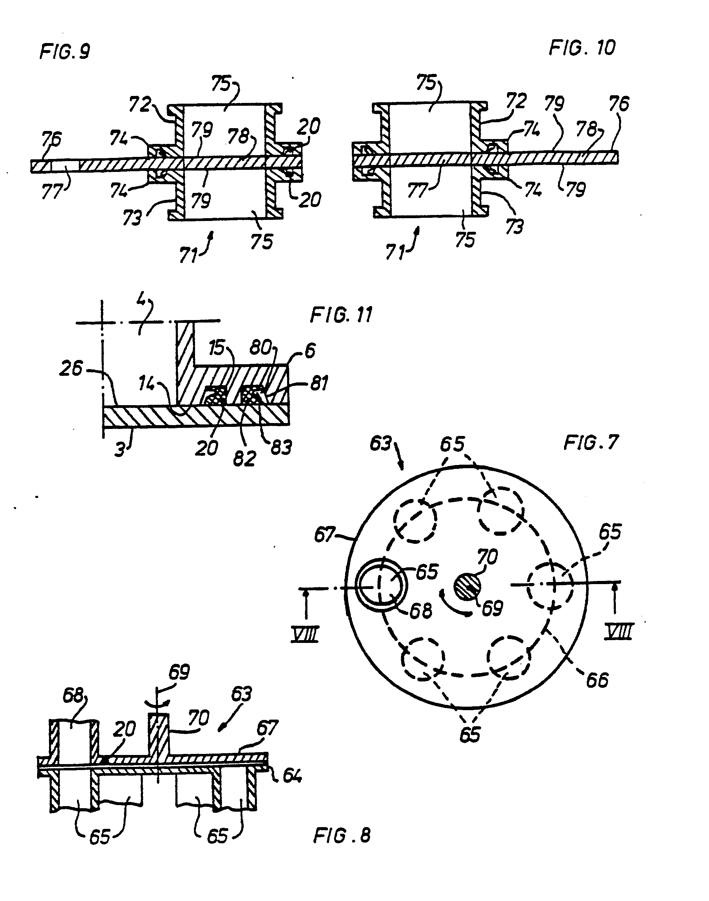

In der in den Fig. 1 bis 4 dargestellten ersten Arbeitsstellung der Schieberweiche 1, in welcher die Öffnung 4 in der Grundplatte 6 mit der Durchgangsöffnung 2 der Schieberplatte 3 fluchtet, dichten die bereits erwähnten Dichtringe 20, 21 die miteinander verbundenen Öffnungen 4, 6 sowie die nicht verbundene Leitung zuverlässig gegenüber der Umgebung ab. Die Dichtringe 20, 21 sorgen dabei zum einen für eine zufriedenstellende Anfangsdichtung, unabhängig von einer etwaigen Druckdifferenz zwischen den Kanälen und der Umgebung. Zum anderen sorgen sie für eine mit der Druckdifferenz steigende Dichtwirkung. Diese wird durch die insbesondere in den Fig. 12 bis 16 dargestellte Querschnittsform der Dichtringe 20, 21 erreicht. Der Querschnitt des Dichtringes 20, 21 hat im wesentlichen eine U-Form, wobei das U in der Dichtringebene liegt und sich radial nach innen oder radial nach außen öffnet. Bei einer radialen Öffnung nach innen (Fig. 1 bis 4 und 9, 10) ist eine Anwendung vorgesehen, bei der auf der Innenseite des Dichtringes 20, 21 der Betriebsdruck größer ist als auf der Außenseite. Bei einem Einsatz des Dichtringes 20, 21 als Vakuumdichtung ist die Umfangsnut 25 radial nach außen geöffnet (Fig. 11).

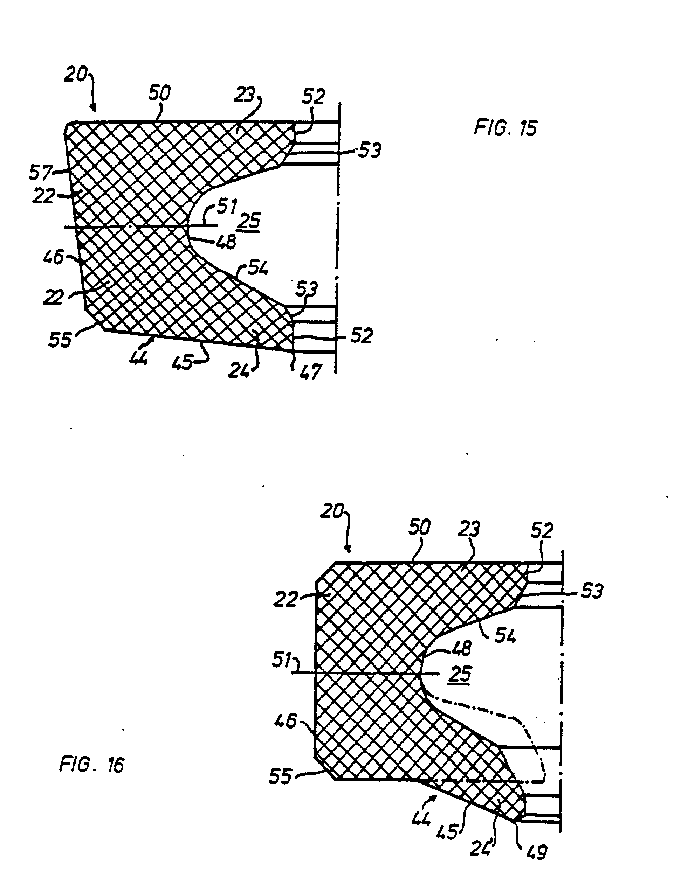

Der in den Fig. 12 bis 16 vergrößert dargestellte Dichtring 20 liegt mit seiner oberen Seitenwand 23 flächig an der radial verlaufenden Grundfläche 17 der jeweiligen Ringnut 15, 16 an, deren Querschnitt in Form von gepunkteten Linien in der Fig. 16 angedeutet ist. Die Grundwand 22 der U-Form liegt gleichermaßen flächig an der zylindrischen, radial nach innen gerichteten Seitenfläche 18 der Ringnut 15, 16 an. Die der Seitenwand 23 gegenüberliegende Dichtlippe 24 des Dichtringes 20, 21 weist an der der Schiebedichtfläche 26 zugewandten Dichtseite 44 eine Schrägfläche 45 auf. Diese Schrägfläche 45 erstreckt sich bei den Ausführungsbeispielen der Fig. 12 bis 15 von der Rückseite 46 der Grundwand 22 durchgehend bis zur vorderen Dichtungskante 47 der Dichtlippe 24. Dagegen ist die Dichtlippe 24' des in der Fig. 16 dargestellten Dichtrings 20 kürzer ausgeführt, und zwar derart, daß die Schrägfläche 45 etwa in der Mitte beziehungsweise von der Ebene im Bereich des Grundes 48 der Umfangsnut 25 ausgehend zur vorderen Dichtungskante verläuft, die hier eine Anfasung 49 besitzt. Bei den Ausführungsbeispielen der Fig. 12 bis 15 ist die Dichtungskante 47 im wesentlichen scharfkantig ausgebildet. Dabei beträgt der Winkel vorne an der Dichtungskante 47 annähernd 90°.

Die an der Grundfläche 17 der Ringnut 15, 16 anliegende Anlagefläche 50 der Seitenwand 23 verläuft parallel zur Mittenebene 51 des Dichtrings 20, 21. An der Rückseite 46 ist der Abstand von der Mittenebene bis zur unteren Dichtseite 44 kleiner als der Abstand im Öffnungsbereich der Umfangsnut 25 von der Mittenebene 51 zur unteren Dichtungskante 47. Die Dichtlippe 24 ist somit spitzwinklig schräg nach unten ausgerichtet. Dabei ist der Abstand zwischen der Anlagefläche 50 der Seitenwand 23 und der Dichtungskante 47 der Dichtlippe 24, 24' etwa ein Zehntel größer als der Abstand zwischen der Anlagefläche 50 und der Dichtseite 44 in der Ebene der Rückseite 46 des Dichtrings 20, 21. Der Dichtring 20 der Fig. 12 bis 15 ist so ausgebildet, daß er am freien Ende der Seitenwand 23 und am freien Ende der Dichtlippe 24 eine Querfläche 52 besitzt, die rechtwinklig zur Mittenebene 51 gerichtet ist. An diese Querflächen 52 schließt sich jeweils eine Neigungsfläche 53 an, die wiederum an schräge Nutbegrenzungsflächen 54 der im wesentlichen C-förmigen Umfangsnut 25 angrenzt.

Die Tiefe der Umfangsnut 25 von den Querflächen 52 bis zum Grund 48 ist so groß, daß sie ungefähr der Stärke der Grundwand 22 entspricht. Das heißt, daß sowohl die Seitenwand 23 als auch die Dichtlippe 24, 24' hinsichtlich ihrer Länge in etwa gleich der Stärke der Grundwand 22 sind. Die mittlere Stärke der Seitenwand 23 ist so gewählt, daß sie ungefähr der halben Stärke der Grundwand 22 entspricht. Ebenso ist die mittlere Stärke der Dichtlippe 24, 24' so gewählt worden, daß sie im wesentlichen gleich der halben Stärke der Grundwand 22 ist. Am unteren Eckbereich zwischen der Dichtseite 44 und der Rückseite 46 besitzt der Dichtring 20, 21 eine Abschrägung 55, so daß in jedem Falle ein einwandfreies Verschieben der Schieberplatte 3 ohne zusätzliche Druckbeanspruchung in diesem Eckbereich durch die Dichtung gegeben ist.

Bei dem in der Fig. 13 dargestellten Ausführungsbeispiel weist der Dichtring 20 an der Rückseite 46 einen Arretierwulst 56 auf, der hier im Eckbereich zwischen der Seitenwand 23 und der Grundwand 22 ausgebildet ist. Der Arretierwulst 56 greift im Montagezustand in eine Ausnehmung in der Seitenfläche 18 der Ringnut 15, 16 ein, so daß ein einwandfreier Festsitz gewährleistet ist. Bei der Ausführungsform gemäß Fig. 14 ist der Arretierwulst 56' im Bereich der Mittenebene 51 an der Rückseite 46 der Grundwand 22 ausgebildet. Der in der Fig. 15 dargestellte Dichtring 20 besitzt an der Rückseite 46 der Grundwand 22 eine Schräge 57, die so ausgeführt ist, daß der Abstand von der Querfläche 52 der Seitenwand 23 bis zur Rückseite 46 größer ist als der Abstand von der Dichtungskante 47 bis zur Rückseite 46. Auch durch diese Ausgestaltung wird eine Arretierung des Dichtrings 20, 21 in der Ringnut 15, 16 erzielt, wobei die Seitenfläche 18 entsprechend dem Verlauf der Schräge 57 schräg hinterschnitten ausgebildet ist.

Um der beim Zusammenbau hereinschwenkenden Dichtlippe 24, 24' genügend Platz innerhalb der Ringnut 15, 16 mit Abstand zur radial innen gelegenen Wandfläche 19 zu bieten, ist diese Wandfläche 19 konisch zur Führungsfläche 14 hin aufweitend ausgeformt. In Fig. 16 ist mit Strichpunktierter Umrißlinie die Lage der Dichtlippe 24' im Einbauzustand erkennbar. Die bei der elastischen Verformung des Dichtringes 20, 21 auftretenden rücktreibenden Kräfte haben zur Folge, daß die Dichtlippe 24, 24' gegen die Schiebedichtfläche 26 des Schiebers 3 andrückt und auf diese Weise eine Anfangsdichtung erzeugt. Wird nun in den miteinander verbundenen Kanälen in der Schieberweiche 1 ein gewisser Überdruck von etwa 0,1 bis 20 bar erzeugt, so hat dies einen entsprechenden Druckaufbau auf der radial innen gelegenen Innenseite der Umfangsnut 25 zur Folge. Dies führt dazu, daß die Dichtlippe 24, 24' entsprechend der Stärke des Überdrucks gegen die Schiebedichtfläche 26 des Schiebers 3 gedrückt wird.

Bei der Anfangsdichtung dichtet die Dichtungskante 47 den radial einwärts gelegenen Bereich gegenüber dem radial auswärts gelegenen, unter Atmosphärendruck stehenden Bereich ab. Bei einem Druckaufbau auf der Innenseite des Dichtringes 20, 21 führt die Druckdifferenz zwischen diesem Bereich und dem genannten radial außerhalb der Dichtungskante 47 gelegenen Bereich zu einer der Druckdifferenz entsprechenden zusätzlichen Andrückkraft, welche die Dichtseite 44 der Dichtlippe 24, 24' gegen die Schiebedichtfläche 26 andrückt. Durch die Abschrägung 55 wird verhindert, daß dieser Eckbereich zwischen die Führungsfläche 14 und Schiebedichtfläche 26 gerät. Die hervorragende Dichteigenschaft beim erfindungsgemäßen Dichtring 20, 21 wird wesentlich durch die spezielle Ausbildung im Bereich der Umfangsnut 25 mitbestimmt, wobei durch die Querfläche 52, die sich daran anschließende Neigungsfläche 53 und die wiederum angrenzende geneigte Nutbegrenzungsfläche 54 der C-förmigen Umfangsnut 25 die Kraft des auftretenden Überdrucks günstig auf den Dichtring 20, 21 verteilt und in dessen Wandungen eingeleitet wird, so daß ein die Sitzeigenschaft des elastischen Teils unterstützender zusätzlicher Druck gegeben ist, daß die in Richtung auf die Sitzfläche wirkenden Druckkomponenten unmittelbar zur Wirkung gelangen. Durch die Neigungsfläche 53 wird die Dichtungskante 47 unterstützend an die Schiebedichtfläche angedrückt. Der Verlauf der C-förmigen Nutbegrenzungsfläche 54 bewirkt, daß der innere Druck gleichmäßig auf die Sitzfläche der Dichtung gegen den Nutgrund und die Seitenfläche geteilt ist, wobei dieser Druck dann wesentlich schwächer ausgeprägt sein kann.

Um die Schieberweiche 1 von einer Arbeitsstellung in die andere umschalten zu können, wird die Schieberplatte 3 durch die Kolbenstange 30 des Stellzylinders 29 verschoben. Der Hub der Kolbenstange 30 entspricht dem Verschiebeweg der Schieberplatte 3 zwischen den beiden Arbeitsstellungen, in welchen die Durchgangsöffnung 2 mit der Öffnung 4 oder der Öffnung 5 fluchtet. Eine genaue Einhaltung des Hubes und damit der genaue Weg des Schiebers wird dadurch eingestellt, daß der Schieberteil einerseits an der Grundplatte des Zylinders anschlägt und andererseits durch das Ende des Kolbenhubes begrenzt wird ; die Feineinstellung erfolgt mit den Muttern 31.

Mit 60 sind Endanschlagschalter bezeichnet.

Den Fig. 1 bis 4 ist zu entnehmen, daß jeweils die beiden konzentrisch zueinander angeordneten Dichtringe 20, 21 unterschiedlichen Durchmessers den Umfangsrand 13 der Öffnung 4 und den Umfangsrand 13 der Öffnung 5 an der Führungsfläche 14 umgeben und die Öffnungen 4, 5 radial nach außen hin abdichten. Demzufolge ist in den beiden Arbeitsstellungen der Schieberweiche 1 die jeweils mit der Durchgangsöffnung 2 nicht verbundene Öffnung 5 (Fig. 1) bzw. 4 nach außen hin durch die abdeckende Schiebedichtfläche 26 der Schieberplatte 3 abgedichtet.

Grundsätzlich würde jeweils ein einziger Dichtring 20 bzw. 21 zur Abdichtung der Öffnungen 4, 5 genügen. Durch die Anordnung zweier Dichtringe 20, 21 ist eine doppelte Sicherheit gegeben, für den Fall, daß der eine Dichtring, aus welchen Gründen auch immer, ausfällt. Diese Anordnung ermöglicht es, die Weiche sowohl bei Überdruck als auch bei bestehendem Unterdruck zu verwenden.

Zur Verstellung der Schieberweiche 1 kann es bei einem sehr hohen Betriebsdruck vorteilhaft sein, den Überdruck kurzfristig etwas zu reduzieren oder auch ganz abzulassen, um den Reibungswiderstand zwischen dem bzw. den Dichtringen 20, 21 und der Schiebedichtfläche 26 herabzusetzen. Eine solche Maßnahme kann bei bestimmten Medien zur Schonung der jeweiligen Dichtlippe beim Überfahren des Öffnungsrandes beitragen. Bei anderen Schüttgütern kann es jedoch durchaus zweckmäßig sein, einen hohen Betriebsdruck auch während der Bewegung der Schieberplatte 3 aufrecht zu erhalten, damit die Dichtlippe stets einwandfrei an der Schiebedichtfläche 26 anliegt und sicherstellt, daß das Medium nicht in den Dichtflächenbereich gelangt.

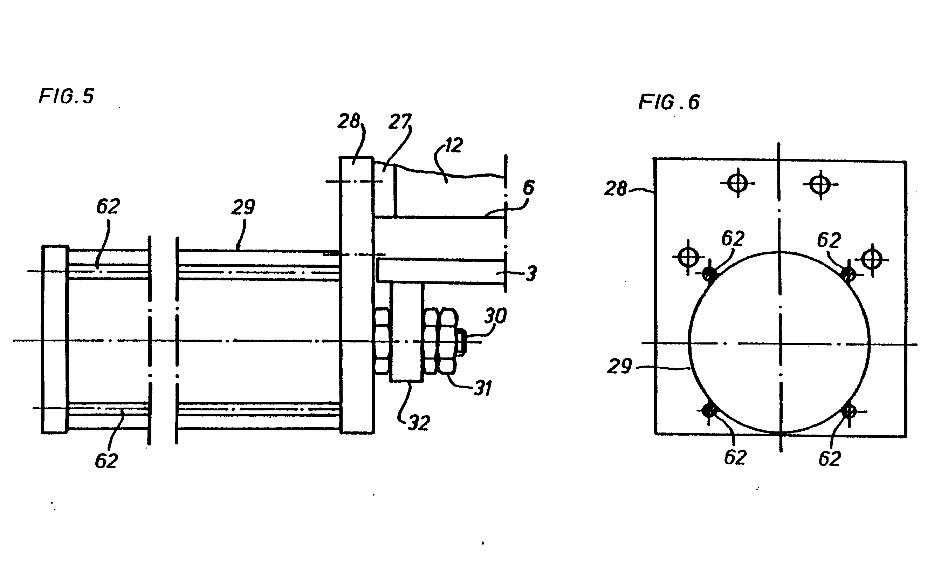

Dem in den Fig. 5 und 6 dargestellten Ausführungsbeispiel ist zu entnehmen, daß hier eine besonders kurze Bauhöhe in Verschieberichtung gegeben ist, indem der Befestigungsteil 32 der Schieberplatte 3 nahe an dem Stellzylinder 29 vorgesehen ist. Im eingefahrenen Zustand der Kolbenstange 30 des Stellzylinders 29 kann das Teil 32 bis an den Montageflansch 28 herangefahren werden. Der Stellzylinder 29 ist hierbei über parallel zur Kolbenstange 30 verlaufende Zugbolzen 62 am Montageflansch 28 befestigt. Dadurch ist der Vorteil gegeben, daß verschiedene Zylinderdurchmesser mit gleichen Anschlußmaßen für die Befestigungs- beziehungsweise Montageplatte vorgesehen werden können. Hierdurch bleiben alle Konstruktionsausführungen an der Schieberweiche selbst, die für den Anschluß unterschiedlich großer Stellzylinder erforderlich sind, erhalten, so daß mit ein- und derselben Weichenkonstruktion mehrere Zylindergrößen verwendet werden können und mit ein- und derselben Weichenkonstruktion den verschiedenen Anforderungen der Praxis durch entsprechenden Anbau geeigneter Stellzylinder Rechnung getragen werden kann.

In den Fig. 7 und 8 ist eine erfindungsgemäße Drehschieberweiche 63 dargestellt, die eine kreisrunde Grundplatte 64 aufweist, die insgesamt sechs Öffnungen 65 besitzt, die im Kreis 68 angeordnet sind. Anstelle einer kreisrunden Platte kann auch eine segmentförmige Platte mit entsprechenden Öffnungen verwendet werden. Auf der Führungsfläche der kreisrunden Grundplatte 64 liegt eine ebenfalls kreisrunde Schieberplatte 67 auf, die eine Durchgangsöffnung 68 besitzt. Diese Durchgangsöffnung 68 fluchtet mit der einen linken Öffnung 65. Die Durchgangsöffnung 68 ist in der Abdichtungsebene zwischen der Grundplatte 64 und der Schieberplatte 67 von einem Dichtring 20 umgeben, der wie zuvor beschrieben ausgeführt ist und wie beim vorigen Ausführungsbeispiel in einer Ringnut sich befindet. Der Dichtring 20 sorgt für ein entsprechendes Abdichten der Öffnungen nach außen zwischen der Grundplatte 64 und der Schieberplatte 67. Zum Umschalten der Drehschieberweiche 63 in eine andere Weichenstellung wird lediglich die kreisrunde Schieberplatte 67 um die Mittenachse 69 gedreht, wofür eine entsprechende Drehwelle 70 an der Schieberplatte 67 angeordnet ist. Die Ringnut zur Aufnahme des Dichtringes 20 ist bei dieser Drehschieberweiche 63 in der kreisrunden Schieberplatte 67 ausgebildet. Die Dichtlippe 24 des Dichtrings 20 ist somit gegen die stationäre Grundplatte 64 gepreßt. Die runde Schieberplatte 67 schließt die anderen fünf Öffnungen 65 ab, wobei es zweckmäßig sein kann, für einen einwandfreien Dichtabschluß nach außen hin dementsprechend fünf weitere Dichtringe 20 in Ringnuten der Schieberplatte 67 zu positionieren. Es kann aber auch günstig sein, die Dichtringe 20 in Ringnuten anzuordnen, die bei der Drehschieberweiche 63 in der kreisrunden Grundplatte 64 ausgebildet sind, so daß die Dichtlippe 24 gegen die kreisrunde Schieberplatte 67 gepreßt ist. Dies empfiehlt sich in Fällen, in denen die blinden Abgänge nicht nach außen abgedichtet sein müssen.

Gemäß dem Ausführungsbeispiel der Fig. 9 und 10 ist die erfindungsgemäße Schiebereinrichtung als Sperrschieberventil 71 ausgebildet. Dieses Sperrschieberventil 71 besitzt zwei Gehäuseteile 72, 73 mit entsprechenden Grundplatten 74 und Öffnungen 75. Zwischen den beiden einander zugewandten Grundplatten 74 befindet sich eine Schieberplatte 76, die eine Durchgangsöffnung 77 und einen Sperrflächenteil 78 aufweist. In beiden Grundplatten 74 der Gehäuseteile 72, 73 sind Ringnuten ausgebildet, in denen je ein Dichtring 20 gelagert ist. Die Dichtlippen der beiden Dichtringe 20 sind gegen je eine Schiebedichtfläche 79 der Schieberplatte 76 gepreßt. Die beiden Schiebedichtflächen 79 der Schieberplatte 76 sind planparallel zueinander ausgerichtet und liegen an entsprechend planparallel dazu angeordneten Führungsflächen 14 der Gehäuseteile 72, 73 an. Das Sperrschieberventil 71 ist so ausgeführt, daß es bezüglich einer Mittenebene in der Ebene der Schieberplatte 76 spiegelsymmetrisch ist. Zum Öffnen des in der Fig. 9 geschlossenen Sperrschieberventils 71 muß lediglich die Schieberplatte 76 so weit nach rechts verschoben werden, daß gemäß der Darstellung in der Fig. 10 die Durchgangsöffnung 77 in der Schieberplatte 76 mit den Öffnungen 75 in den Gehäuseteilen 72, 73 fluchtet. Da die Durchgangsöffnung 77 innerhalb des Durchmesserbereichs der Dichtringe 20 angeordnet ist, ergibt sich auch in diesem Falle eine Abdichtung des Sperrschieberventils 71 im Bereich der Schieberplatte 76 nach außen hin.

Bei dem in der Fig. 11 dargestellten Ausführungsbeispiel eines Teils der erfindungsgemäßen Schiebereinrichtung sind in der Grundplatte 6, an deren Führungsfläche 14 die Schieberplatte 3 mit ihrer Schiebedichtfläche 26 anliegt, zwei Ringnuten 15, 80 ausgebildet. Die Ringnut 15 ist wie beim ersten Ausführungsbeispiel ausgeführt. Die äußere Ringnut 80 ist andersherum ausgebildet, und zwar so, daß die Wandfläche 81 mit ihrer Schräge nach außen weist. In der Ringnut 15 befindet sich der Dichtring 20. In der Ringnut 21 ist ein Dichtring 82 gelagert, der im wesentlichen wie der Dichtring 20 ausgeführt ist, wobei jedoch dessen Umfangsnut 83 nach außen gerichtet ist. Die erfindungsgemäßen Dichtringe 15, 82 sind somit einmal zum Medium nach innen hin und zum anderen nach außen hin gerichtet. Auf diese Weise kann eine absolute Dichtsicherheit gegen Überdruck und auch gegen Unterdruck bei der Schiebevorrichtung erzielt werden.

Es liegt auch im Rahmen der Erfindung, nur einen einzigen Dichtring 82 mit nach außen gerichteter Umfangsnut 83 vorzusehen. Eine solche Ausführung wird eingesetzt, wenn der Druck radial einwärts des Dichtringes 82, also innerhalb der Schiebereinrichtung, geringer ist, als der Druck radial außerhalb des Dichtringes 82, der zumeist dem Umgebungsdruck entspricht. Da die Dichtlippe des Dichtringes 82 auch in diesem Falle durch die Druckdifferenz zusätzlich gegen die Schiebedichtfläche gedrückt wird, erhält man auch hier die gewünschte Abdichtung, die mit zunehmendem Aufbau eines Vakuums im Inneren der Schiebereinrichtung ansteigt, da der auf das Innere der Umfangsnut 83 wirkende Atmosphärendruck zunimmt.

Um Produkt-Vermischungen, insbesondere bei feinkörnigen Schüttgütern zu vermeiden, die dadurch auftreten können, daß sich Produktteilchen in die C-förmige Öffnung, also in die Nut 25 des Dichtungsringes eindringen und bei der Verschiebung in die Rohrleitung gelangen, kann der durch die C-Form gebildete Hohlraum im Ausführungsbeispiel die Nut 25, mit luftdurchlässigem Material aus Textil oder Kunststoff ausgefüllt werden, und zwar so, daß zwar das Eindringen der Luft, die erforderlich ist für die zusätzliche Anpassung des Dichtungsringes, ermöglicht wird, ein Eintreten von feinen Produktteilchen jedoch vermieden wird.

Die vorstehend beschriebenen Weichen und Schieber können generell bei Leitungsanlagen eingesetzt werden, in denen Gase, Flüssigkeiten oder Feststoffteilchen, insbesondere Schüttgüter, tranportiert werden. Wie beschrieben, kommt auch die Anwendung bei Vakuumanlagen in Betracht. Als besonders günstig hat sich die Verwendung der Schiebereinrichtung bei pneumatischen Förderanlagen für Schüttgüter erwiesen. Während bei herkömmlich ausgebildeten Schiebereinrichtungen diese bei feinkörnigen Schüttgütern nach kurzer Zeit zu Undichtigkeiten im Dichtungsbereich führen, erhält man bei Einsatz der erfindungsgemäßen Dichtringe 20, 21, 82 lange Standzeiten. Das Material der Dichtringe 20, 21, 82 und des Schlauches ist extrem verschleißfest. Zudem ist das Material vorteilhaft antistatisch, so daß keine Aufladung erfolgen kann, was für verschiedene Fördersysteme bzw. zu fördernde Medien besonders günstig ist. Zudem ist aufgrund der erfindungsgemäßen Anordnung und Ausbildung im Bedarfsfalle ein schnelles und einfaches Auswechseln der Dichtringe vor Ort möglich.

## Patentansprüche

1. Schiebereinrichtung mit einer Grundplatte (6, 64, 74) und einer Schieberplatte (3, 67, 76), die mindestens eine Durchgangsöffnung (2, 77) aufweist, die durch Verschieben der Schieberplatte (3, 67, 76) in ihrer Ebene mit einer Öffnung (4, 5, 65, 75) der Grundplatte (6, 64, 74) für den Durchtritt eines Mediuns in Übereinstimmung bringbar ist, und mit einen zwischen der Grundplatte (6, 64, 74) und der Schieberplatte (3, 67, 76) in einer die Öffnung (4, 5, 65, 75) ungebenden Ringnut (15, 16, 80) angeordneten Dichtring (20, 21, 82), der eine der Überdruckseite zugewandte Umfangsnut (25, 83) aufweist, die von einer Grundwand (22), einer Seitenwand (23) und einer gegenüberliegenden Dichtlippe (24, 24') begrenzt ist, die in Richtung zum Überdruck mit dessen Unterstützung radial schräg gegen eine Schiebedichtfläche (26, 79) gepreßt ist, dadurch gekennzeichnet, daß der Dichtring (20, 21, 82) an der der Seitenwand (23) gegenüberliegenden Dichtseite (44) an der unter elastischer Vorspannung stehenden Dichtlippe (24, 24') eine Schrägfläche (45) aufweist.

2. Schiebereinrichtung nach Anspruch 1, dadurch gekennzeichnet, daß die Schrägfläche (45) an der Dichtseite (44) der Dichtlippe (24) sich von der der Öffnung der Umfangsnut (25, 83) gegenüberliegenden Rückseite (46) der Grundwand (22) bis zur vorderen Dichtungskante (47) der Dichtlippe (24) erstreckt.

3. Schiebereinrichtung nach Anspruch 1, dadurch gekennzeichnet, daß die Schrägfläche (45) an der Dichtseite (44) der Dichtlippe (24') sich etwa von der Ebene im Bereich des Grundes (48) der Umfangsnut (25) bis zur vorderen Dichtungskante (47) erstreckt.

4. Schiebereinrichtung nach einem der Ansprüche 1 bis 3, dadurch gekennzeichnet, daß die Dichtlippe (24) des Dichtrings (20, 21, 82) an der Dichtungskante (47) in wesentlichen scharfkantig ausgebildet ist und an der Dichtungskante (47) spitzwinklig mit einem Winkel von annähernd 90° ausgeführt ist.

5. Schiebereinrichtung nach einem der Ansprüche 1 bis 3, dadurch gekennzeichnet, daß die Dichtlippe (24') des Dichtrings (20) an der Dichtungskante eine Anfasung (49) aufweist.

6. Schiebereinrichtung nach einem der Ansprüche 1 bis 5, dadurch gekennzeichnet, daß der Abstand zwischen einer Anlagefläche (50) der Seitenwand (23) und der Dichtungskante (47) der Dichtlippe (24) etwa 1/10 größer ist als der Abstand zwischen der Anlagefläche (50) und der Dichtseite (44) an der Rückseite (46) des Dichtrings (20, 21, 82).

7. Schiebereinrichtung nach einem der Ansprüche 1 bis 6, dadurch gekennzeichnet, daß der Dichtring (20, 21, 82) an freien Ende der Seitenwand (23) und der Dichtlippe (24, 24') zwischen Querflächen (52) und Endbereichen einer in wesentlichen C-förmigen Nutbegrenzungsfläche (54) eine Neigungsfläche (53) aufweist.

8. Schiebereinrichtung nach einem der Ansprüche 1 bis 7, dadurch gekennzeichnet, daß der Dichtring (20, 21, 82) an der Rückseite (46) der Grundwand (22) einen in eine Ausnehmung einer Seitenfläche (18) der Ringnut (15, 16, 80) eingreifenden Arretierwulst (56, 56') aufweist, wobei vorzugsweise der Arretierwulst (56) des Dichtrings (20) im Eckbereich zwischen der Seitenwand (23) und der Grundwand (22) ausgebildet ist.

9. Schiebereinrichtung nach einem der Ansprüche 1 bis 8, dadurch gekennzeichnet, daß der Dichtring (20) an der Rückseite (46) der Grundwand (22) eine Schräge (57) aufweist, derart, daß der Abstand zur Rückseite (46) vom freien Ende der Seitenwand (23) größer ist als von der Dichtungskante (47) der Dichtlippe (24).

10. Schiebereinrichtung nach einem der Ansprüche 1 bis 9, dadurch gekennzeichnet, daß mindestens im Eckbereich zwischen der Dichtseite (44) und der Rückseite (46) des Dichtrings (20, 21, 82) eine Abschrägung (55) ausgebildet ist.

11. Schiebereinrichtung nach einem der Ansprüche 1 bis 10, dadurch gekennzeichnet, daß die der Seitenfläche (18) der Ringnut (15, 16, 80) gegenüberliegende Wandfläche (19) derart schräg ausgeführt ist, daß die Öffnungsbreite der Ringnut (15, 16, 80) an der Dichtseite (44) des

8

Dichtrings (20, 21, 82) größer ist als die Breite an der Grundfläche (17) der Ringnut (15, 16, 80).

12. Schiebereinrichtung nach einem der Ansprüche 1 bis 11, dadurch gekennzeichnet, daß dem die Öffnung (4, 5, 65, 75) der Grundplatte (6) umgebenden einen Dichtring (20) mindestens ein zweiter Dichtring (21) zugeordnet ist, der in einer weiteren Ringnut (16) gelagert ist und mit einer Umfangsnut (25, 83) und einer Dichtlippe (24, 24') im wesentlichen wie der erste Dichtring (20) ausgebildet ist, wobei vorzugsweise der innere und der äußere Dichtring (20, 21) gleichgerichtet sind und beide Umfangsnuten (25) mit ihren Öffnungsseiten zur Überdruckseite weisen.

13. Schiebereinrichtung nach Anspruch 12, dadurch gekennzeichnet, daß der innere und der äußere Dichtring (20, 82) einander entgegengerichtet sind, wobei die Umfangsnut (25) des inneren Dichtringes (20) mit der Öffnungsseite radial nach innen zur Öffnung (4, 5) in der Grundplatte (6) weist und die Umfangsnut (83) des äußeren Dichtringes (82) mit ihrer Öffnungsseite radial nach außen oder umgekehrt gerichtet ist.

14. Schiebereinrichtung nach einem der Ansprüche 1 bis 13, dadurch gekennzeichnet, daß mit mindestens zwei in der Grundplatte (6) ausgebildeten Öffnungen (4, 5), mit denen die Durchgangsöffnung (2) der Schieberplatte (3) durch Verschiebung wahlweise in Übereinstimmung bringbar ist, eine Schieberweiche (1) für das Medium gebildet ist und daß jeder der Öffnungen (4, 5) in der Grundplatte (6) mindestens ein Dichtring (20, 21, 82) mit überdruckseitig geöffneter Umfangsnut (25, 83) zugeordnet ist, wobei vorzugsweise die Schieberplatte (3) der Schieberweiche (1) an Führungsleisten (33, 34) gelagert ist und mit der Schiebedichtfläche (26) planparallel an einer Führungsfläche (14) der Grundplatte (6) in der Ebene der Dichtlippe (24, 24') des Dichtrings (20, 21, 82) anliegt.

15. Schiebereinrichtung nach einem der Ansprüche 1 bis 14, dadurch gekennzeichnet, daß mindestens die Schiebedichtfläche (26) der Schieberplatte (3) und/oder die Führungsfläche (14) der Grundplatte (6) mit einer Gleitschicht vorzugsweise aus einem elastischen, hochverschleißfesten thermoplastischen Kunststoff oder aus einer Aluminiumoxydverbindung versehen ist.

16. Schiebereinrichtung nach einem der Ansprüche 1 bis 15, dadurch gekennzeichnet, daß an der Schieberplatte (3) koaxial zur Durchgangsöffnung (4, 5) ein entsprechend den Schiebebewegungen in Längsrichtung stauch- und biegbarer flexibler Schlauch (39) angeordnet ist, der vorzugsweise mindestens an einem Ende einen materialeinheitlich einstückig angeformten Dichtungsflansch (38, 38') aufweist, der über einen übergestülpten Flanschring (41, 41') an einer der Schiebedichtfläche (26) abgewandten Anschlußfläche (37) der Schieberplatte (3) dicht angeschlossen ist.

17. Schiebereinrichtung nach Anspruch 16, dadurch gekennzeichnet, daß der Dichtungsflansch (38, 38') des Schlauches (39) in einer Aussparung (40) des Flanschrings (41, 41') gelagert und mittels Gewindebolzen (42) gegen die Anschlußfläche (37) der Schieberplatte (3) gespannt ist.

18. Schiebereinrichtung nach einem der Ansprüche 16 oder 17, dadurch gekennzeichnet, daß der Schlauch (39) der Schieberweiche (1) an dem der Schieberplatte (3) abgewandten Ende einen weiteren Flanschring (41') aufweist, der hier einen ebenfalls mit dem Schlauch materialeinheitlich einstückig ausgebildeten Dichtungsflansch übergreift.

19. Schiebereinrichtung nach einem der Ansprüche 16 bis 18, dadurch gekennzeichnet, daß die Wandung (43) des flexiblen Schlauches (39) an den Endbereichen zur Versteifung stärker ausgebildet ist als im übrigen Längenbereich.

20. Schiebereinrichtung nach einem der Ansprüche 1 bis 19, dadurch gekennzeichnet, daß an der der Führungsfläche (41) der Grundplatte (6) gegenüberliegenden Seite der Schieberweiche (1) koaxial zu den Öffnungen (4, 5) Anschlußrohre (7, 8) vorgesehen sind, die einen Stirnflanschteller (9) aufweisen, an dem zwei zu den Anschlußrohren (7, 8) koaxiale Rohre (10, 11) mit je einem Flansch befestigt sind, wobei vorzugsweise die Schieberweiche (1) zur Versteifung an der der Führungsfläche (14) abgewandten Seite der Grundplatte (6) eine Versteifungsplatte (12) aufweist.

21. Schiebereinrichtung nach einem der Ansprüche 1 bis 20, dadurch gekennzeichnet, daß der Schieberweiche (1) ein vorzugsweise pneumatischer Stellzylinder (29) zugeordnet ist, dessen Kolbenstange (30) zur Verschiebung der Schieberplatte (3) an letzterer angeordnet ist, wobei vorzugsweise der Stellzylinder (29) über einen stirnseitigen Montageflansch (28) an einem Haltewinkel (27) der Grundplatte (6) festgelegt ist.

22. Schiebereinrichtung nach Anspruch 21, dadurch gekennzeichnet, daß ein Befestigungsteil (32) der Schieberplatte (3) an der Kolbenstange (30) in deren eingefahrener Position sich in unmittelbarer Nähe am Montageflansch (28) des Stellzylinders (29) befindet.

23. Schiebereinrichtung nach einem der Ansprüche 21 bis 22, dadurch gekennzeichnet, daß der Stellzylinder (29) der Schieberweiche (1) über parallel zur Kolbenstange (30) angeordnete Zugbolzen (62) am Montageflansch (28) befestigt und letzterer zur wahlweisen Befestigung verschieden großer Stellzylinder (29) mit gleichen Anschlußmaßen ausgebildet ist.

24. Schiebereinrichtung nach einem der Ansprüche 1 bis 23, dadurch gekennzeichnet, daß die Schieberweiche (1) mit ihrem Grundkörper, bestehend aus der Grundplatte (6), der querstehenden Versteifungsplatte (12) und dem parallel zur Grundplatte (6) liegenden Stirnflanschteller (9), der als Peiner ausgeführt ist und an dem beide Anschlußrohre (7, 8) angeordnet sind, im wesentlichen in Form eines Doppel-T-Trägers als kurzbauende, eigenund verwindungssteife Kompaktbaueinheit ausgebildet ist.

25. Schiebereinrichtung nach einem der Ansprüche 1 bis 24, dadurch gekennzeichnet, daß mindestens die mit dem durch die Schieberweiche (1) strömenden Medium in Berührung kommenden Innenflächen (Anschlußrohr 7, 8, Öffnung 4, 5, Durchgangsöffnung 2) der Schieberweiche (1) mit einer verschleißfesten Schutzbeschichtung versehen sind.

## Claims

1. Gate valve device with a base plate (6, 64, 74) and a gate valve plate (3, 67, 76), which comprises at least one through hole (2, 77), which by sliding the gate valve plate (3, 67, 76) in its plane, can be brought into alignment with an opening (4, 5, 65, 75) in the base plate (6, 64, 74) for the passage of a medium and with a sealing ring (20, 21, 82) located between the base plate (6, 64, 74) and the gate valve plate (3, 67, 76) in an annular groove (15, 16, 80) surrounding the opening (4, 5, 65, 75), which sealing ring comprises a peripheral groove (25, 83) facing the excess pressure side, which peripheral groove is defined by a base wall (22), a side wall (23) and an opposing sealing lip (24, 24'), which is pressed in the direction towards the excess pressure with its support radially obliquely against a sliding sealing surface (26, 79), characterised in that on the sealing side (44) lying opposite the side wall (23), on the sealing lip (24, 24') which is under elastic pre-tension, the sealing ring (20, 21, 82) comprises an inclined surface (45).

2. Gate valve device according to Claim 1, characterised in that the inclined surface (45) on the sealing side (44) of the sealing lip (24) extends from the rear side (46) of the base wall (22) located opposite the opening in the peripheral groove (25, 83) as far as the front sealing edge (47) of the sealing lip (24).

3. Gate valve device according to Claim 1, characterised in that the inclined surface (45) on the sealing side (44) of the sealing lip (24') extends approximately from the plane in the region of the base (48) of the peripheral groove (25) to the front sealing edge (47).

4. Gate valve device according to one of Claims 1 to 3, characterised in that the sealing lip (24) of the sealing ring (20, 21, 82) on the sealing edge (47) is constructed substantially with a sharp edge and at the sealing edge (47) is constructed with an acute angle with an angle of approximately 90°.

5. Gate valve device according to one of Claims 1 to 3, characterised in that the sealing lip (24') of the sealing ring (20) comprises a chamfer (49) at the sealing edge.

6. Gate valve device according to one of Claims 1 to 5, characterised in that the spacing between a contact surface (50) of the side wall (23) and the sealing edge (47) of the sealing lip (24) is approximately 1/10 greater than the spacing between the contact surface (50) and the sealing side (44) on the rear side (46) of the sealing ring (20, 21, 82).

7. Gate valve device according to one of Claims 1 to 6, characterised in that at the free end of the side wall (23) and of the sealing lip (24, 24') between transverse surfaces (52) and end regions of a substantially C-shaped groove-boundary surface (54), the sealing ring (20, 21, 82) comprises an inclined surface (53).

8. Gate valve device according to one of Claims 1 to 7, characterised in that on the rear side (46) of the base wall (22), the sealing ring (20, 21, 82) comprises an arresting bead (56, 56') engaging in a recess in a side face (18) of the annular groove (15, 16, 80), preferably the arresting bead (56) of the sealing ring (20) being constructed in the corner region between the side wall (23) and the base wall (22).

9. Gate valve device according to one of Claims 1 to 8, characterised in that on the rear side (46) of the base wall (22), the sealing ring (20) comprises a slope (57) so that the distance to the rear side (46) from the free end of the side wall (23) is greater than from the sealing edge (47) of the sealing lip (24).

10. Gate valve device according to one of Claims 1 to 9, characterised in that a bevel (55) is formed at least in the corner region between the sealing side (44) and the rear side (46) of the sealing ring (20, 21, 82).

11. Gate valve device according to one of Claims 1 to 10, characterised in that the wall surface (19) lying opposite the side face (18) of the annular groove (15, 16, 80) is constructed obliquely so that the opening width of the annular groove (15, 16, 80) on the sealing side (44) of the sealing ring (20, 21, 82) is greater than the width on the bottom surface (17) of the annular groove (15, 16, 80).

12. Gate valve device according to one of Claims 1 to 11, characterised in that at least a second sealing ring (21) is associated with a sealing ring (20) surrounding the opening (4, 5, 65, 75) in the base plate (6), which second sealing ring (21) is mounted in a further annular groove (16) and is constructed with a peripheral groove (25, 83) and a sealing lip (24, 24') substantially like the first sealing ring (20), whereby preferably the inner and the outer sealing ring (20, 21) are unidirectional and both peripheral grooves (25) point with their opening sides towards the excess pressure side.

13. Gate valve device according to Claim 12, characterised in that the inner and outer sealing ring (20, 82) are directed towards each other, the peripheral groove (25) of the inner sealing ring (20) pointing radially inwards with the opening side towards the opening (4, 5) in the base plate (6) and the peripheral groove (83) of the outer sealing ring (82) being directed radially outwards or vice versa by its opening side.

14. Gate valve device according to one of Claims 1 to 13, characterised in that a gate valve deflector (1) for the medium is formed with at least two openings (4, 5) constructed in the base plate (6), with which the through hole (2) in the gate valve plate (3) can be brought into alignment optionally by sliding and that associated with each of the openings (4, 5) in the base plate (6) is at least one sealing ring (20, 21, 82) with a peripheral groove (25, 83) open on the excess pressure side, the gate valve plate (3) of the gate valve deflector (1) preferably being mounted on guide bars (33, 34) and bearing with the sliding sealing surface (26) in a plane parallel manner against a guide surface (14) of the base plate (6) in the plane of the sealing lip (24, 24') of the sealing ring (20, 21, 82).

15. Gate valve device according to one of Claims 1 to 14, characterised in that at least the sliding sealing surface (26) of the gate valve plate (3) and/or the guide surface (14) of the base plate (6) is provided with a sliding layer preferably consisting of a resilient, thermo-plastic synthetic material which is highly resistant to wear or of an aluminium oxide compound.

16. Gate valve device according to one of Claims 1 to 15, characterised in that provided on the gate valve plate (3) coaxially with respect to the through hole (4, 5) is a flexible hose (39) which can be compressed and bent according to the sliding movements in the longitudinal direction, which hose preferably comprises at least at one end a sealing flange (38, 38') attached integrally and of uniform material, which is connected in a tight manner by way of a flange ring (41, 41') which is slipped over, to a connection surface (37) of the gate valve plate (3) which is remote from the sliding sealing surface (26).

17. Gate valve device according to Claim 16, characterised in that the sealing flange (38, 38') of the hose (39) is mounted in a recess (40) in the flange ring (41, 41') and is tightened by means of threaded bolts (42) against the connecting surface (37) of the gate valve plate (3).

18. Gate valve device according to one of Claims 16 or 17, characterised in that at the end remote from the gate valve plate (3), the hose (39) of the gate valve deflector (1) comprises a further flange ring (41'), which in this case engages over a sealing flange likewise constructed integrally and of uniform material with the hose.

19. Gate valve device according to one of Claims 16 to 18, characterised in that the wall (43) of the flexible hose (39) is thicker at the end regions than in the remaining longitudinal region for the purpose of strengthening.

20. Gate valve device according to one of Claims 1 to 19, characterised in that provided on the side of the gate valve deflector (1) lying opposite the guide surface (41) of the base plate (6), coaxially with respect to the openings (4, 5) are connecting tubes (7, 8), which comprise an end flanged disc (9), on which two tubes (10, 11) coaxial to the connecting tubes (7, 8) are attached respectively by a flange, in which case the gate valve deflector (1) preferably comprises a strengthening plate (12) for the purpose of strengthening on the side of the base plate (6) remote from the guide surface (14).

21. Gate valve device according to one of Claims 1 to 20, characterised in that associated with the gate valve deflector (1) is a preferably pneumatic operating cylinder (29), whereof the piston rod (30) is arranged for displacement of the gate valve plate (3) on the latter, the operating cylinder (29) preferably being fixed by way of a mounting flange (28) on the end face to a retaining bracket (27) of the base plate (6).

22. Gate valve device according to Claim 21, characterised in that an attachment member (32) of the gate valve plate (3) on the piston rod (30) in its retracted position, is located in the immediate vicinity of the mounting flange (28) of the operating cylinder (29).

23. Gate valve device according to one of Claims 21 to 22, characterised in that the operating cylinder (29) of the gate valve deflector (1) is attached by way of tension bolts (62) arranged parallel to the piston rod (30), to the mounting flange (28) and the latter is constructed for selective attachment of various sizes of operating cylinder (29) with the same connection dimensions.

24. Gate valve device according to one of Claims 1 to 23, characterised in that the gate valve deflector (1) with its basic member, consisting of the base plate (6), of the transverse strengthening plate (12) and the end flanged disc (9) lying parallel to the base plate (6), which is constructed as a wide-flanged member and on which both connecting tubes (7, 8) are located, is constructed essentially in the form of a double-T-support as a short compact component which is inherently rigid and resistant to distortion.

25. Gate valve device according to one of Claims 1 to 24, characterised in that at least the inner surfaces coming into contact with the medium flowing through the gate valve deflector (1) (connecting tube 7, 8, opening 4, 5, through hole 2) of the gate valve deflector (1) are provided with a wear-resistant protective coating.

## Revendications

1. Dispositif de vanne à tiroir avec une plaque de base (6, 64, 74) et un plateau de vanne (3, 67, 76) qui comporte au moins une ouverture de passage (2, 77) laquelle, par déplacement du plateau de vanne (3, 67, 76) dans son plan, peut être mise en coïncidence avec une ouverture (4, 5, 65, 75) de la plaque de base (6, 64, 74) pour le passage d'un produit, et avec une bague d'étanchéité (20, 21, 82) disposée entre la plaque de base (6, 64, 74) et le plateau de vanne (3, 67, 76) dans une rainure annulaire (15, 16, 80) entourant l'ouverture (4, 5, 65, 75) et présentant une rainure périphérique (25, 83) dirigée vers le côté surpression, laquelle rainure périphérique est délimitée par une paroi de fond (22), une paroi latérale (23) et une lèvre d'étanchéité opposée (24, 24') qui est poussée, en direction de la surpression et avec l'aide de celle-ci, radialement et en oblique contre une surface d'étanchéité coulissante (26, 79), caractérisé en ce que la bague d'étanchéité (20, 21, 82) comporte une surface inclinée (45) sur la lèvre d'étanchéité (24, 24') mise sous précontrainte élastique, sur la face d'étanchéité (44) opposée à la paroi latérale (23).

2. Dispositif de vanne à tiroir selon la revendication 1, caractérisé en ce que la surface inclinée (45) sur la face d'étanchéité (44) de la lèvre d'étanchéité (24) s'étend de l'ouverture de la rainure périphérique (25, 83), opposée à la face arrière (46) de la paroi de fond (22), jusqu'à l'arête d'étanchéité antérieure (47) de la lèvre d'étanchéité (24).

3. Dispositif de vanne à tiroir selon la revendication 1, caractérisé en ce que la surface inclinée (45) sur la face d'étanchéité (44) de la lèvre d'étanchéité (24') s'étend approximativement du plan dans la région du fond (48) de la rainure périphérique (25) jusqu'à l'arête d'étanchéité antérieure (47).

4. Dispositif de vanne à tiroir selon l'une quelconque des revendications 1 à 3, caractérisé en ce que la lèvre d'étanchéité (24) de la bague d'étanchéité (20, 21, 82) est conformée essentiellement à angle vif à l'arête d'étanchéité (47) et que l'arête d'étanchéité (47) présente un angle aigu d'environ 90º.

5. Dispositif de vanne à tiroir selon l'une quelconque des revendications 1 à 3, caractérisé en ce que la lèvre d'étanchéité (24') de la bague d'étanchéité (20) présente un chanfrein (49) sur l'arête d'étanchéité.

6. Dispositif de vanne à tiroir selon l'une quelconque des revendications 1 à 5, caractérisé en ce que la distance entre une portée (50) de la paroi latérale (23) et l'arête d'étanchéité (47) de la lèvre d'étanchéité (24) est plus grande d'environ 1/10 que la distance entre la portée (50) et la face d'étanchéité (44) à la face arrière (46) de la bague d'étanchéité (20, 21, 82).

7. Dispositif de vanne à tiroir selon l'une quelconque des revendications 1 à 6, caractérisé en ce que la bague d'étanchéité (20, 21, 82) présente, à l'extrémité libre de la paroi latérale (23) et de la lèvre d'étanchéité (24, 24'), entre les surfaces transversales (52) et les extrémités d'une surface de délimitation de rainure (54) essentiellement en forme de C, une surface inclinée (53).

8. Dispositif de vanne à tiroir selon l'une quelconque des revendications 1 à 7, caractérisé en ce que la bague d'étanchéité (20, 21, 82) comporte à la face arrière (46) de la paroi de fond (22) un bourrelet d'arrêt (56, 56') s'engageant dans un évidement d'une surface latérale (18) de la rainure annulaire (15, 16, 80), le bourrelet d'arrêt (56) de la bague d'étanchéité (20) étant conformé, de préférence, dans la région du coin, entre la paroi latérale (23) et la paroi de fond (22).

9. Dispositif de vanne à tiroir selon l'une quelconque des revendications 1 à 8, caractérisé en ce que la bague d'étanchéité (20) comporte à la face arrière (46) de la paroi de fond (22) un chanfrein (57) de telle façon que la distance entre la face arrière (46) et l'extrémité libre de la paroi latérale (23) est plus grande que la distance entre la face arrière (46) et l'arête d'étanchéité (47) de la lèvre d'étanchéité (24).

10. Dispositif de vanne à tiroir selon l'une quelconque des revendications 1 à 9, caractérisé en ce qu'un chanfrein (55) est réalisé au moins dans la région du coin entre la face d'étanchéité (44) et la face arrière (46) de la bague d'étanchéité (20, 21, 82).

11. Dispositif de vanne à tiroir selon l'une quelconque des revendications 1 à 10, caractérisé en ce que la paroi (19) opposée à la paroi latérale (18) de la rainure annulaire (15, 16, 80) est inclinée de telle façon que la largeur de l'ouverture de la rainure annulaire (15, 16, 80), à la face d'étanchéité (44) de la bague d'étanchéité (20, 21, 82), est plus grande que la largeur à la surface de fond (17) de la rainure annulaire (15, 16, 80).

12. Dispositif de vanne à tiroir selon l'une quelconque des revendications 1 à 11, caractérisé en ce qu'à la bague d'étanchéité (20) qui entoure l'ouverture (4, 5, 65, 75) de la plaque de base (6) est associée au moins une deuxième bague d'étanchéité (21) montée dans une autre rainure annulaire (16) et comportant une rainure périphérique (25, 83) et une lèvre d'étanchéité (24, 24') essentiellement analogue à la première bague d'étanchéité (20), les bagues d'étanchéité intérieure et extérieure (20, 21) étant orientées, de préférence, dans le même sens, et les deux rainures périphériques (25) étant dirigées avec leur ouverture vers le côté surpression.

13. Dispositif de vanne à tiroir selon la revendication 12, caractérisé en ce que les bagues d'étanchéité intérieure et extérieure (20, 82) sont dirigées l'une vers l'autre, la rainure périphérique (25) de la bague d'étanchéité intérieure (20) étant orientée, avec le côté ouverture, radialement vers l'intérieur, en direction de l'ouverture (4, 5) de la plaque de base (6) et la rainure périphérique (83) de la bague d'étanchéité extérieure (82) étant orientée, avec son côté ouverture, radialement vers l'extérieur ou inversement.

14. Dispositif de vanne à tiroir selon l'une quelconque des revendications 1 à 13, caractérisé en ce qu'une vanne à tiroir (1) pour le produit est réalisée avec au moins deux ouvertures (4, 5) ménagées dans la plaque de base (6) avec lesquelles l'ouverture de passage (2) du plateau de vanne (3) peut, au choix, être mise en coïncidence par déplacement, et qu'à chacune des ouvertures (4, 5) dans la plaque de base (6) est associée au moins une bague d'étanchéité (20, 21, 82) avec une rainure périphérique (25, 83) ouverte vers le côté surpression, le plateau de vanne (3) de la vanne à tiroir (1) étant monté, de préférence, sur des barres de guidage (33, 34) et appliqué avec la surface d'étanchéité coulissante (26) de manière plane-parallèle contre une surface de guidage (14) de la plaque de base (6), dans le plan de la lèvre d'étanchéité (24, 24') de la bague d'étanchéité (20, 21, 82).

15. Dispositif de vanne à tiroir selon l'une quelconque des revendications 1 à 14, caractérisé en ce qu'au moins la surface d'étanchéité coulissante (26) du plateau de vanne (3) et/ou la surface de guidage (14) de la plaque de base (6) sont munies d'une couche antifriction réalisée, de préférence, à partir d'une matière thermoplastique élastique présentant une forte résistance à l'usure ou à partir d'un composé d'oxyde d'aluminium.

16. Dispositif de vanne à tiroir selon l'une quelconque des revendications 1 à 15, caractérisé en ce que sur le plateau de vanne (3) est disposé, coaxialement à l'ouverture de passage (4, 5), un tuyau flexible (39) pouvant être comprimé et plié conformément aux mouvements coulissants dans le sens longitudinal qui comporte, de préférence, au moins une bride d'étanchéité (38, 38') conformée dans le même matériau et en une seule pièce à l'une des extrémités et fixée de manière étanche sur une surface de raccordement (37) du plateau de vanne (3) opposée à la surface d'étanchéité coulissante (26) par l'intermédiaire d'un anneau de bride (41, 41') engagé par-dessus.

17. Dispositif de vanne à tiroir selon la revendication 16, caractérisé en ce que la bride d'étanchéité (38, 38') du tuyau (39) est logée dans un évidement (40) de l'anneau de bride (41, 41') et bloquée contre la surface de raccordement (37) du plateau de vanne (3) au moyen de boulons filetés (42).

18. Dispositif de vanne à tiroir selon l'une des revendications 16 ou 17, caractérisé en ce que le tuyau 39 de la vanne à tiroir (1) présente, à l'extrémité opposée au plateau de vanne (3), un autre anneau de bride (41') qui recouvre ici une bride d'étanchéité également conformée dans le même matériau et en une seule pièce avec le tuyau.

19. Dispositif de vanne à tiroir selon l'une des revendications 16 à 18, caractérisé en ce que la paroi (43) du tuyau flexible (39) est renforcée aux extrémités en vue de leur raidissement par rapport au reste de la section longitudinale.

20. Dispositif de vanne à tiroir selon l'une quelconque des revendications 1 à 19, caractérisé en ce que, du côté de la vanne à tiroir (1) opposé à la surface de guidage (41) de la plaque de base (6) sont prévus, coaxialement aux ouvertures (4, 5), des tuyaux de raccordement (7, 8) qui présentent un plateau à bride frontale (9) sur lequel sont montés avec respectivement une bride deux tuyaux (10, 11) coaxiaux aux tuyaux de raccordement (7, 8), la vanne à tiroir (1) présentant, de préférence, pour le raidissement, une plaque raidisseuse (12) du côté de la plaque de base (6) opposé à la surface de guidage (14).

21. Dispositif de vanne à tiroir selon l'une quelconque des revendications 1 à 20, caractérisé en ce qu'à la vanne à tiroir (1) est associé un cylindre de réglage (29), de préférence pneumatique, dont la tige de piston (30) pour le déplacement du plateau de vanne (3) est montée sur ce dernier, le cylindre de réglage (29) étant monté, de préférence, sur une équerre de fixation (27) de la plaque de base (6) par l'intermédiaire d'une bride de montage frontale (28).

22. Dispositif de vanne à tiroir selon la revendication 21, caractérisé en ce qu'un élément de fixation (32) du plateau de vanne (3) sur la tige de piston (30) se trouve, dans la position rentrée de celle-ci, à proximité immédiate de la bride de montage (28) du cylindre de réglage (29).

23. Dispositif de vanne à tiroir selon l'une des revendications 21 ou 22, caractérisé en ce que le cylindre de réglage (29) de la vanne à tiroir (1) est fixé sur la bride de montage (28) par l'intermédiaire de boulons d'assemblage (62) disposés parallèlement à la tige de piston (30) et que ladite bride de montage présente les mêmes côtés de raccordement pour la fixation, au choix, de cylindres de réglage (29) de différentes tailles.

24. Dispositif de vanne à tiroir selon l'une quelconque des revendications 1 à 23, caractérisé en ce que la vanne à tiroir (1), avec son corps de base, constituée par la plaque de base (6), la plaque raidisseuse transversale (12) et le plateau à bride frontale (9) disposé parallèlement à la plaque de base (6), conformé en guillotine et portant les deux tuyaux de raccordement (7, 8), est essentiellement réalisée sous la forme d'une poutre en I en tant qu'unité compacte de faible hauteur qui présente une grande stabilité propre et une grande rigidité à la torsion.

25. Dispositif de vanne à tiroir selon l'une quelconque des revendications 1 à 24, caractérisé en ce qu'au moins les surfaces intérieures de la vanne à tiroir (1) entrant en contact avec le produit qui traverse la vanne à tiroir (1) (tuyau de raccordement 7, 8, ouverture 4, 5, ouverture de passage 2) sont munies d'un revêtement protecteur résistant à l'usure.

FIG . 1

0 135 042

FIG. 2

FIG.3

FIG. 4

FIG.5

FIG.6

0 135 042

FIG.9

FIG. 10

FIG. 11

FIG.7

FIG .8

FIG . 12

FIG. 13

FIG. 14

FIG. 15

FIG. 16